# EUROPÄISCHE PATENTANMELDUNG

(11) **EP 2 179 829 A1**
(43) Veröffentlichungstag der Anmeldung: **28.04.2010**
(21) Anmeldenummer: 10152309.0
(22) Anmeldetag: 20.11.2006
(51) Int. Cl.: B29C 31/06, A23G 1/20, A23G 3/20

(54) **Verfahren und Vorrichtung zum Giessen von Verzehrprodukten**

(30) Priorität: 31.01.2006 DE 102006004690
(62) Teilanmeldung aus: 06817716.1
(71) Anmelder: Bühler AG, 9240 Uzwil (CH)
(72) Erfinder: Ouriev, Boris, 9244 Niederuzwil (CH); Steiner, Uwe, 9244 Niederuzwil (CH)
(74) Vertreter: Nieswand, Martina

(57) **Zusammenfassung**

Die Erfindung bezieht sich auf eine Giessmaschine (1) zum Herstellen eines Verzehrproduktes aus einer giessbaren Masse, insbesondere einer Fettmasse wie z.B. Schokolade, mit einem temperierbaren Massebehälter (2) zur Aufnahme der giessbaren Masse und mit mindestens einer Düse (4), die mit dem Massebehälter-Innenraum in Fluidverbindung steht, auf eine Verwendung einer Düse in einer Giessmaschine und auf ein Verfahren zum Herstellen eines Verzehrprodukts unter Verwendung einer Giessmaschine. Erfindungsgemäss hat die Düse eine Düsenöffnung oder eine Düsenverengung, deren Öffnungsquerschnitt bzw. Strömungsquerschnitt flexibel ist.

## Beschreibung

Die Erfindung bezieht sich auf eine Giessmaschine zum Herstellen eines Verzehrproduktes aus einer giessbaren Masse, insbesondere aus einer Fettmasse wie z.B. Schokolade. Derartige Giessmaschinen besitzen einen temperierbaren Massebehälter zur Aufnahme der giessbaren Masse, mindestens eine Düse, die mit dem Massebehälter Innenraum in Fluidverbindung steht, sowie eine Druckquelle zum Erzeugen eines Überdrucks in dem Massebehälter-Innenraum.

In der Praxis bestehen die Bestandteile solcher Giessmaschinen aus starren Metallteilen. Der temperierbare Massebehälter dient zur Aufnahme der giessbaren Masse. Von seinem Boden führen Leitungen weg, die jeweils in eine von einer Vielzahl von Kammer münden, in denen jeweils ein Kolben bewegbar ist. Jeder der Kammern ist andererseits mit jeweils einer Düse verbunden. Eine Ventilfunktion ist für jede Kammer/Kolben/Düsen-Einheit vorgesehen.

In einem Ansaughub öffnet das jeweilige Ventil die jeweilige Verbindungsleitung zwischen dem Massebehälter und der jeweiligen Kammer, während die jeweilige Verbindungsleitung zwischen der jeweiligen Kammer und der jeweiligen Düse blockiert wird. Der jeweilige Kolben bewegt sich in der Kammer dann derart, dass das freie Kammervolumen vergrössert und Masse in die jeweilige Kammer hineingesaugt wird.

In einem Ausstosshub schliesst das jeweilige Ventil die jeweilige Verbindungsleitung zwischen dem Massebehälter und der jeweiligen Kammer, während die jeweilige Verbindungsleitung zwischen der jeweiligen Kammer und der jeweiligen Düse geöffnet wird. Der jeweilige Kolben bewegt sich in der Kammer dann derart, dass das freie Kammervolumen verkleinert und Masse aus der jeweiligen Kammer heraus und zur jeweiligen Düse gepumpt wird.

Die aus der Düse austretende Masse wird dann auf eine Unterlage oder in eine Hohlform gepresst bzw. gegossen. Bei einigen besonderen Bauformen derartiger Giessmaschinen ist die Ventilfunktion mit der Kolbenfunktion gekoppelt. Hierfür ist der Kolben z.B. als im wesentlichen zylindrischer Hub/Dreh-Kolben ausgebildet, der in einer Zylinderkammer einerseits eine Hubbewegung entlang der Achse der Kammer bzw. des Kolbens und andererseits eine Drehbewegung um die Achse der Kammer bzw. des Kolbens ausführen kann. Durch eine spezielle Anordnung der Einmündungen der Verbindungsleitungen in der jeweiligen Kammerwand und entsprechende Aussparungen und/oder Durchtritte in dem jeweiligen Kolben kann durch eine Abfolge von Hub- und Drehbewegungen des jeweiligen Kolbens in einer ersten Richtung und einer entgegen gesetzten zweiten Richtung ein vollständiger Giesszyklus (Ansaugen + Ausstossen) durchgeführt werden.

Wenn auch bei den letztgenannten kompakteren Bauformen derartiger Giessmaschinen die Anzahl der beweglichen Teile durch die Vereinigung der Kolben- und Ventilfunktion etwas verringert werden konnte, besitzen solche herkömmlichen Giessmaschinen immer noch ein grosse Anzahl beweglicher Teile.

Darüber hinaus lässt sich in vielen Fällen beim Giessen dünnflüssiger Massen am Ende des Ausstosshubes ein Nachfliessen aus der Düse nicht verhindern. Bei den meisten Anwendungen, in denen Schokoladenmasse gegossen wird, erfolgt das Giessen bei derart hohen Temperaturen, dass zumindest die bei niedrigeren Temperaturen schmelzenden Kristallmodifikationen der Triglyceride aufgeschmolzen sind, so dass die Schokoladenmasse insgesamt in einem recht dünnflüssigen Zustand vorliegt und ein Nachfliessen an den Düsen stattfindet.

Da in der Regel kleine Mengen pro Giesszyklus gegossen werden, findet fast der gesamte Giessvorgang im transienten (nichtstationären) Modus statt. Neben dem vorgenannten Nachfliessen und den dadurch zumindest mitverursachten Dosierabweichungen führt das vorwiegend im transienten Bereich stattfindende Giessen aber auch zu strukturellen Veränderungen in der Masse. Dies kann zu Beeinträchtigungen der Qualität der gegossenen Schokoladenmassen führen.

Ausserdem ist es praktisch nicht möglich, bei vorgegebenen Produktionsleistungen (Taktfrequenz und Dosiermenge pro Takt) den durch die Fliesseigenschaften (Viskosität) von zu giessender Schokoladenmasse und durch die geometrischen Randbedingungen bedingten zeitlichen Verlauf des Strömungswiderstandes zu beeinflussen.

Der stromaufseitig von der Düse wirkende absolute Druck muss ausreichend gross sein, um die Fliessgrenze der zu giessenden Schokoladenmasse zu Beginn des Giessens zu überwinden. Dies führt dazu, dass dieser Druck zunächst stark ansteigt. Sobald das Fliessen beginnt, bedarf es eines viel kleineren Druckes, um ein weiteres konstantes Fliessen aufrecht zu erhalten. Dazu kommt noch, dass sich aufgrund der nun fliessenden laminaren Scherströmung mit parabel-ähnlichem Strömungsprofil eine Veränderung der Fliesseigenschaften (Viskosität) der Schokoladenmasse dahingehend einstellt, dass die Viskosität abnimmt. Die Scherung wirkt hier also verdünnend. Der anfänglich benötigte Druck zur Überwindung der Fliessgrenze der Schokoladenmasse ist daher viel grösser als der nach Beginn des Fliessens benötigte Druck zur Aufrechterhaltung des Fliessens. Die Auslegung der Druckquellen und die Stabilität vieler Maschinenteile muss sich aber an diesem maximalen Druckbedarf orientieren.

Der Erfindung liegt daher die Aufgabe zugrunde, eine Giessmaschine zum Herstellen eines Verzehrproduktes aus einer giessbaren Masse, insbesondere aus einer Fettmasse wie z.B. Schokolade, bereitzustellen, bei der die geschilderten Nachteile und Unzulänglichkeiten beim Giessen vermieden oder zumindest verringert werden können.

Diese Aufgabe wird durch eine Giessmaschine gemäss Anspruch 1 gelöst mit einem temperierbaren Massebehälter zur Aufnahme der giessbaren Masse und mit mindestens einer Düse, die mit dem Massebehälter-Innenraum in Fluidverbindung steht, bevorzugt eine Druckquelle zum Erzeugen eines Überdrucks in dem Massebehälter-Innenraum, dadurch gekennzeichnet, wobei die Düse eine Düsenöffnung hat, deren Strömungs- und/oder Öffnungsquerschnitt flexibel ist.

Dies ermöglicht primär eine Anpassung der geometrischen Randbedingungen der Düse und sekundär eine gezielte Beeinflussung der durch die Materialstruktur bedingten Fliesseigenschaften der giessbaren Masse. Durch Erhöhung des Strömungs- und/oder Öffnungsquerschnitts der Düse zu Beginn des Giessvorgangs und vorzugsweise Verringerung des Strömungs- und/oder Öffnungsquerschnitts der Düse während des Giessvorgangs kann so eine Vergleichmässigung des Druckverlaufs während eines gesamten Giesszyklusses erreicht werden.

Der Strömungs- und/oder Öffnungsquerschnitt der Düse kann steuerbar sein, wobei es besonders zweckmässig ist, wenn der Öffnungsquerschnitt der Düsenöffnung durch Druck steuerbar ist. Hierfür kann der absolute Druck im Massebehälter-Innenraum verwendet werden. Alternativ oder ergänzend kann der die Düsenöffnung steuernde Druck über die im Massebehälter-Innenraum enthaltene und die Innenwand der Düsenöffnung kontaktierende giessbare Masse vermittelt werden.

Neben dieser aktiven Beeinflussung des Düsenquerschnitts kann die Düse auch ein rein passives Verhalten gegenüber Strömungen haben. Hierfür besitzt die Düse eine Ventilfunktion. Diese Ausführung ermöglicht es, auf die eingangs geschilderten Ventilfunktionen zusätzlich zu den Kolben oder in Kombination mit den Kolben (Hub/DrehKolben) zu verzichten.

Eine besonders vorteilhafte Ausführung der erfindungsgemässen Giessmaschine ist **dadurch gekennzeichnet, dass** die Düse zumindest im Bereich der Düsenöffnung ein flexibles elastisches Material, insbesondere ein Elastomermaterial, aufweist. Dies ermöglicht es, dass zumindest ein Teilbereich der Düse sich automatisch an die Druck- und Strömungsverhältnisse während eines Giesszyklusses anpasst (passiver Ausgleich). Indem sich das Elastomermaterial zu Beginn des Giesszyklusses dehnt, kann die Druckspitze zu Beginn des Giesszyklusses markant verringert werden, während nach Überwindung der Fliessgrenze sich das Elastomermaterial zusammenzieht und auf diese Weise die Strömungsgeschwindigkeit und somit die Scherrate in der Strömung hoch bleiben, was z.B. bei Schokoladenmasse zu einer niedrigen Viskosität führt.

Vorteilhafterweise weist die Düse ein elastisches Element auf, das die Düsenöffnung im Ruhezustand verschliesst. Dadurch wird jegliches Nachfliessen am Ende des Giesszyklusses verhindert. Das elastische Element kann ein ringartiges Element sein, das sich um die Düsenöffnung herum erstreckt.

Vorzugsweise weist die Düse ein elastisches Element mit einem Hohlraum auf, der mit einer Fluidquelle mit veränderlichem Fluiddruck in Fluidverbindung steht. Dadurch kann das elastische Element mit einem Fluid gefüllt und mittels des Fluiddrucks mehr oder weniger stark aufgebläht werden. Während eines Giesszyklusses kann somit eine gezielte aktive Anpassung des Düsenquerschnitts und/oder der Düsenkanalgeometrie erfolgen (aktiver Ausgleich). Durch den Fluiddruck im Hohlraum des elastischen Elements kann dessen Elastizität und somit dessen Flexibilität gezielt eingestellt bzw. an die Fliesseigenschaften der zu giessenden Masse angepasst werden.

Als Druckquelle der Giessmaschine kann ein in den Massebehälter-Innenraum verschiebbarer Verdrängungskörper, insbesondere ein Stempel oder eine Membran, verwendet werden. Ausserdem oder alternativ kann als Druckquelle der Giessmaschine ein mit komprimiertem Gas, insbesondere komprimierter Luft, gefüllter Druckbehälter verwendet werden, der über ein Ventil mit dem Massebehälter-Inneraum in Fluidverbindung schaltbar ist. Dadurch kann stromaufseitig aller Düsen der notwendige Druck in dem Massebehälter aufgebaut werden, um die Masse durch die jeweiligen Düsen hindurch zu pressen.

Zweckmässigerweise enthält der Massebehälter der Giessmaschine eine Entgasungsöffnung, um komprimiertes Gas, insbesondere komprimierte Luft, aus dem Massebehälter-Innenraum auszustossen, wobei die Entgasungsöffnung des Massebehälters vorzugsweise ein Entgasungsventil ist. Dadurch kann stromaufseitig aller Düsen der Druck in dem Massebehälter abgesenkt werden, um das Pressen der Masse durch die jeweiligen Düsen zu verlangsamen und schliesslich zu beenden.

Vorteilhaft ist es auch, wenn die Wand des Massebehälters zumindest in Teilbereichen aus einem flexiblen elastischen Material, insbesondere aus einem Elastomermaterial, besteht. Dadurch wird ermöglicht, dass der Druck im Massebehälter-Innenraum durch das Volumen des Massebehälter-Innenraums steuerbar ist. Vorzugsweise ist hierfür zumindest ein Teilbereich der Wand des Massebehälters als flexible Membran ausgebildet, die grossflächig nach innen gedrückt oder nach aussen gezogen werden kann, um den Drück im Innern des Massebehälters zu erhöhen oder zu verringern.

Auch die gesamte Düse kann aus einem flexiblen elastischen Material, insbesondere aus einem Elastomermaterial, bestehen. Wie schon weiter oben erläutert, lässt sich dadurch eine Vergleichmässigung des Druckverlaufs während eines Giesszyklusses erreichen (passiver Ausgleich). Vorzugsweise ist die Düse direkt an der Wand des Masse-behälters angebracht, d.h. eine Verbindungsleitung zwischen dem Massebehälter und der Düse ist nicht notwendig. Dies vereinfacht den Aufbau der erfindungsgemässen Giessmaschine. Insbesondere erübrigt sich ein aufwändiges Beheizen solcher Verbindungsleitungen. Darüber hinaus ergibt sich der Vorteil, dass die zu giessende Masse (z.B. Schokoladenmasse) zwischen ihrer Verweilzeit im Massebehälter, wo sie zweckmässigerweise thermisch und/oder mechanisch (Scherung und/oder Vibration) konditioniert wird, in der Düse eine durch diese Konditionierung klar definierte Struktur aufweist, da kein Transport über eine Verbindungsleitung erfolgen muss.

Die flexible Düse kann einen geschlitzten Bereich, einen balgartig gefalteten Bereich, einen dehnbaren Bereich, einen handschuh-fingerartig umstülpbaren Bereich oder Kombinationen davon aufweisen.

Bei einer "Schlitzdüse" befindet sich z.B. am Düsenende mindestens ein Schlitz. Vorzugsweise handelt es sich dabei um einen Kreuzschlitz aus zwei sich rechtwinklig kreuzenden Schlitzen oder um einen Sternschlitz aus drei oder mehr sich sternartig kreuzenden Schlitzen.

Bei einer "Balgdüse" besitzt die Düse eine Baiganordnung mit Balgfalten quer zur Düsenlängsrichtung. Dadurch lässt sich die Länge der Düse durch den Fluiddruck der Masse im Innern der Düse verändern.

Ähnlich verhält es sich bei einer "Dehndüse". Das elastomere Düsenmaterial ist so gegossen, dass es im unverformten entspannten Zustand eine relativ kurze Düse bildet. Erst bei Dehnung des Düsenmaterials durch Druckausübung im Innern der Düse wird die Düse dann länger und kann z.B. auf eine gewünschte Ziellänge verlängert werden.

Bei einer "Umstülpdüse" ist das elastomere Düsenmaterial ist so gegossen, dass die Düse im unverformten entspannten Zustand ins Innere des Massebehälters ragt. Erst bei Dehnung des Düsenmaterials durch Druckausübung im Innern der Düse wird die Düse dann umgestülpt und kann wiederum auf eine gewünschte Ziellänge verlängert werden. Zweckmässigerweise ist der Düse ein Aufnahmebereich für die durch die Düse giessbare Masse zugeordnet. Dies kann ganz einfach eine Auflagefläche, ein Förderband oder dgl. sein. Insbesondere kann der Aufnahmebereich eine Hohlform sein, in welche die Masse durch die Düse gegossen wird. Vorzugsweise ist dieser Aufnahmebereich temperiert, um eine optimale Verfestigung der gegossenen Masse zu erzielen.

Der Aufnahmebereich kann auch ein mit einem Auffangfluid gefüllter Behälter sein. Besonders geeignet ist z.B. ein mit Flüssigkeit gefülltes Becken und/oder ein Gas-Wirbelbett. Das mit Flüssigkeit gefüllte Becken kann zur Kühlung der gegossenen Masseeinheiten z.B. durch Wasser oder zur Beschichtung der gegossenen Masseeinheiten z.B. mit einer speziell gefärbten Überzugsmasse mit speziellem Geschmack dienen.

Vorzugsweise besitzt jede der Düsen mindestens einen Drucksensor zum Erfassen des Druckes in ihrem Innern. Vorzugsweise besitzt auch der Massebehälter mindestens einen Drucksensor zum Erfassen des Druckes in seinem Innern.

Dadurch kann ein durch Druckänderungen im Massebehälter-Innenraum und in der Düse sowie durch Formänderungen der Düse geprägtes Giessverfahren durchgeführt werden. Hierbei findet ein Wechselspiel der durch die Form und die Elastizität der Düse bestimmte Düsenflexibilität sowie der Drücke im Massebehälter und in der Düse statt.

Die erfindungsgemässe "weiche Giessmaschine" besitzt somit zumindest flexible Düsen, deren Flexibilität einstellbar und somit an die Fliesseigenschaften der zu giessenden Masse anpassbar ist.

Zur Lösung der Aufgabe stellt die Erfindung auch ein Verfahren bereit, bei dem eine temperierte giessbare Masse in einem Massebehälter bereitgestellt wird, ein Überdruck in dem Massebehälter-Innenraum erzeugt wird, und die Masse durch eine mit dem Massebehälter in Fluidverbindung stehende Düse bei gleichzeitigem Verändern des Strömungs- und/oder Öffnungsquerschnitts der Düse hindurchgepresst wird.

Vorzugsweise wird zumindest während des Hindurchpressens der Masse durch die Düse der Druck der durch die Düse gepressten Masse erfasst, wobei der erfasste Druck der Masse vorteilhaft als Grundlage für die Steuerung des Strömungs- oder Öffnungsquerschnitts der Düse verwendet wird.

Die Veränderung des Strömungs- und/oder Öffnungsquerschnitts der Düse erfolgt dabei entweder durch passiven Ausgleich oder durch aktiven Ausgleich oder durch eine Kombination von passivem und aktivem Ausgleich.

Ein passiver Ausgleich erfolgt, indem sich die zumindest in Teilbereichen flexible Düse automatisch an die Strömungs- und Druckverhältnisse beim Giessen anpasst.

Ein aktiver Ausgleich erfolgt, indem die zumindest in Teilbereichen flexible Düse angesteuert wird, um sie an die Strömungs- und Druckverhältnisse beim Giessen anzupassen. Vorzugsweise wird der flexible Teilbereich der Düse derart angesteuert, dass seine Elastizität und/oder Form und somit seine Flexibilität verändert werden.

Die Aufgabe wird ausserdem gelöst durch eine Giessmaschine zum Herstellen eines Verzehrproduktes aus einer giessbaren Masse, insbesondere einer Fettmasse wie z.B. Schokolade, mit einem Massebehälter zur Aufnahme der giessbaren Masse, mindestens einer Düse, die mit dem Massebehälter-Innenraum in Fluidverbindung steht und mit einer Druckquelle zum Erzeugen eines Überdrucks in dem Massebehälter-Innenraum, wobei die Düse eine Düsenöffnung oder eine Düsenverengung hat, deren Öffnungsquerschnitt bzw. Strömungsquerschnitt flexibel ist.

Die Aufgabe wird weiterhin gelöst durch ein Verfahren zum Herstellen eines Verzehrproduktes aus einer giessbaren Masse, insbesondere einer Fettmasse wie z.B. Schokolade, vorzugsweise unter Verwendung einer Giessmaschine wie oben beschrieben, mit den folgenden Schritten:
- Bereitstellen einer temperierten giessbaren Masse in einem Massebehälter,
- Erzeugen eines Überdrucks in dem Massebehälter-Innenraum,
- Hindurchpressen der Masse durch eine mit dem Massebehälter in Fluidverbindung stehende Düse bei gleichzeitigem Verändern des Strömungs- und/oder Öffnungsquerschnitts der Düse.

Weitere Vorteile, Merkmale und Anwendungsmöglichkeiten der Erfindung ergeben sich anhand der nun folgenden, nicht einschränkend aufzufassenden Beschreibung bevorzugter Ausführungen der erfindungsgemässen Giessmaschine und Düsen, wobei:
Fig. 1 den Aufbau einer herkömmlichen Giessmaschine in einer teilweise geschnitten Ansicht schematisch zeigt;
Fig. 2 den prinzipiellen Aufbau einer erfindungsgemässen Giessmaschine in einer teilweise geschnitten Ansicht schematisch zeigt;
Fig. 3 den Aufbau eines ersten Ausführungsbeispiels der erfindungsgemässen Giessmaschine in einer teilweise geschnitten Ansicht schematisch zeigt;
Fig. 4 den Aufbau eines zweiten Ausführungsbeispiels der erfindungsgemässen Giessmaschine in einer teilweise geschnitten Ansicht schematisch zeigt;
Fig. 5 den Aufbau einer ersten Ausführung der Düse der erfindungsgemässen Giessmaschine in einer Schnittansicht in einem ersten Betriebszustand schematisch zeigt;
Fig. 6 den Aufbau der ersten Ausführung der Düse der erfindungsgemässen Giessmaschine in einer Schnittansicht in einem zweiten Betriebszustand schematisch zeigt;
Fig. 7 den zeitlichen Druckverlauf während eines Giessvorgangs in einer herkömmlichen Giessmaschine (mit starrer Düse) und in einer erfindungsgemässen Giessmaschine (mit flexibler Düse) zeigt; und
Fig. 8 den zeitlichen Verlauf des Massenflusses während eines Giessvorgangs in einer herkömmlichen Giessmaschine (mit starrer Düse) und in einer erfindungsgemässen Giessmaschine (mit flexibler Düse) zeigt.

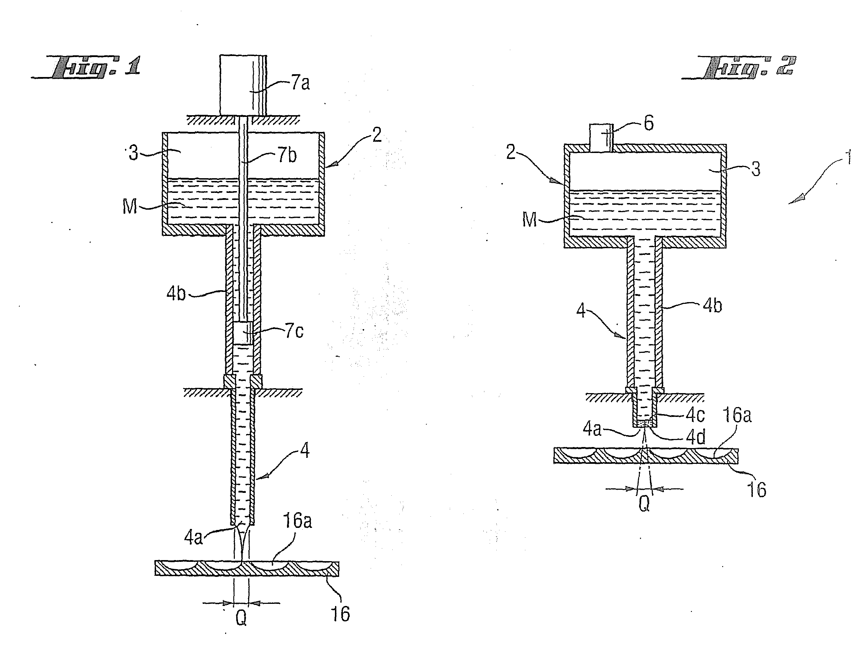

Fig. 1 zeigt schematisch den Aufbau einer herkömmlichen Giessmaschine in einer teilweise geschnitten Ansicht. Die Giessmaschine besteht aus einem Massebehälter 2 zur Aufnahme einer giessbaren Masse M, wie z.B. Schokoladenmasse, einer Düse 4 mit einer Düsenöffnung 4a am unteren Ende der Düse und einer Druckquelle, die durch . einen Antrieb 7a, eine Kolbenstange 7b und einen Kolben 7c gebildet wird. Der Kolben 7c ist in einem oberen Bereich 4b der Düse 4 gleitend gelagert. Unterhalb der Düse 4 ist eine Form 16 mit einer Vielzahl Alveolen bzw. Vertiefungen 16a angeordnet. Alle mit der zu giessenden Masse M in Berührung kommenden Bestandteile 2, 4, 7b, 7c dieser Giessmaschine sind starre Teile.

Im Betrieb bewegt der Antrieb 7a die aus Kolbenstange 7b und Kolben 7c bestehende Einheit nach unten, um die Masse M in der Düse 4 durch die Düsenöffnung 4a hindurchzupressen. Dabei gelangt eine dem Kolbenhub in der Düse 4 entsprechende Menge der Masse M in jede der Alveolen 16a, die sich unter der Düse 4 befinden.

Wenn mit einer derartigen herkömmlichen Giessmaschine geschmolzene Schokoladenmasse gegossen wird, kann ein Nachtropfen bzw. Nachfliessen von Schokoladenmasse aus der Düse 4 nach dem eigentlichen Giessvorgang nicht ausgeschlossen werden. Dies kann die Dosiergenauigkeit und das Erscheinungsbild der gegossenen Schokoladenartikel beeinträchtigen.

Fig. 2 zeigt schematisch den prinzipiellen Aufbau einer erfindungsgemässen Giessmaschine 1 in einer teilweise geschnitten Ansicht. Die Giessmaschine 1 besteht aus einem Massebehälter 2 zur Aufnahme einer giessbaren Masse M, wie z.B. Schokoladenmasse, einer Düse 4 mit einer Düsenöffnung 4a am unteren Ende der Düse und einem Druckventil 6, das mit einer (nicht gezeigten Druckquelle) verbunden ist. Vorzugsweise wird als Druckmedium Druckluft verwendet, die in einem (nicht gezeigten) Kompressor erzeugt und in einem (ebenfalls nicht gezeigten) Druckluftbehälter gespeichert wird, der mit dem Druckventil 6 in Fluidverbindung steht. Unterhalb der Düse 4 ist wiederum eine Form 16 mit einer Vielzahl Alveolen bzw. Vertiefungen 16a angeordnet.

Im Gegensatz zu der in Fig. 1 schematisch gezeigten herkömmlichen Giessmaschine sind bei der in Fig. 2 gezeigten erfindungsgemässen Giessmaschine 1 nicht alle mit der zu giessenden Masse M in Berührung kommenden Bestandteile starre Teile. Vielmehr befindet sich am unteren Ende der Düse 4 eine in der Düsenöffnung 4a angeordnete Membran 4c aus einem Elastomermaterial. Diese Membran weist einen oder mehrere Schlitze 4d auf. Die giessbare Masse M wird bei geschlossener Membran, d.h. bei nichtgespreiztem Schlitz, im Innern der Düse 4 gehalten. Dazu tragen auch die Oberflächenspannung der Masse M, deren Fliessgrenze und deren Haften an der Innenwand der Düse 4 bei.

Im Betrieb wird dem Innenraum 3 des Massebehälters 2 über das Druckventil 6 Druckluft oder ein anderes Gas oder Gasgemisch zugeführt, wodurch der Druck im Innenraum 3 des Massebehälters 2 ansteigt. Durch diesen Druckanstieg wird die Masse M aus dem Massebehälter 2 und aus dem Innern der Düse 4 nach unten gedrückt, wodurch sich die Membran 4c elastisch dehnt und der eine Schlitz oder die mehreren Schlitze 4d der Membran 4c aufgespreizt werden. Dabei wird Masse M in der Düse 4 durch die geöffnete Schlitzmembran 4c hindurchgepresst, wobei eine dem Überdruck in dem Massebehälter 2 entsprechende Menge der Masse M in jede der Alveolen 16a, die sich unter der Düse 4 befinden, gedrückt wird.

Im Gegensatz zur Düsenöffnung 4a mit unveränderlichem Querschnitt Q der herkömmlichen Giessmaschine der Fig. 1 hat die erfindungsgemässe Giessmaschine 1 eine Düse 4 mit veränderlichem Öffnungsquerschnitt Q, der durch die flexible Schlitzmembran 4c aus elastisch dehnbarem Material gebildet ist.

Anstelle einer geschlitzten Membran 4c aus Elastomermaterial kann auch eine mit einem Loch oder einer Vielzahl von Löchern versehene Membran verwendet werden. Eine derartige "Siebmembran" trägt zu einer Vereinheitlichung der Strömungsverhältnisse über den gesamten Düsenquerschnitt bei.

Der für den Dosierhub des Kolbens 7c (Fig. 1) bei der herkömmlichen Giessmaschine benötigte obere Bereich 4b der Düse 4 kann bei der erfindungsgemässen Giessmaschine 1 (Fig. 2) auch weggelassen werden. Man erhält dadurch eine sehr kurze Düse 4 im Boden des Massebehälters 2. Im Extremfall kann die eigentliche Düse 4 auch ohne vertikale Länge ausgebildet sein, d.h. die Düsenöffnung 4a ist eine Öffnung in der Bodenwand des Massebehälters 2, und die flexible Schlitzmembran 4c befindet sich in dieser Öffnung. So kann eine sehr kompakte erfindungsgemässe Giessmaschine 1 bereitgestellt werden. Vorzugsweise sind im Boden des Massebehälters eine Vielzahl von Düsen 4, d.h. eine Vielzahl Düsenöffnungen 4a mit einer jeweiligen Schlitzmembran 4c, vorgesehen. Dadurch erspart man sich nicht nur die jeder Düse zugeordneten Kolben und Gestänge, sondern man erhält eine Giessmaschine mit sehr kompakter Bauform.

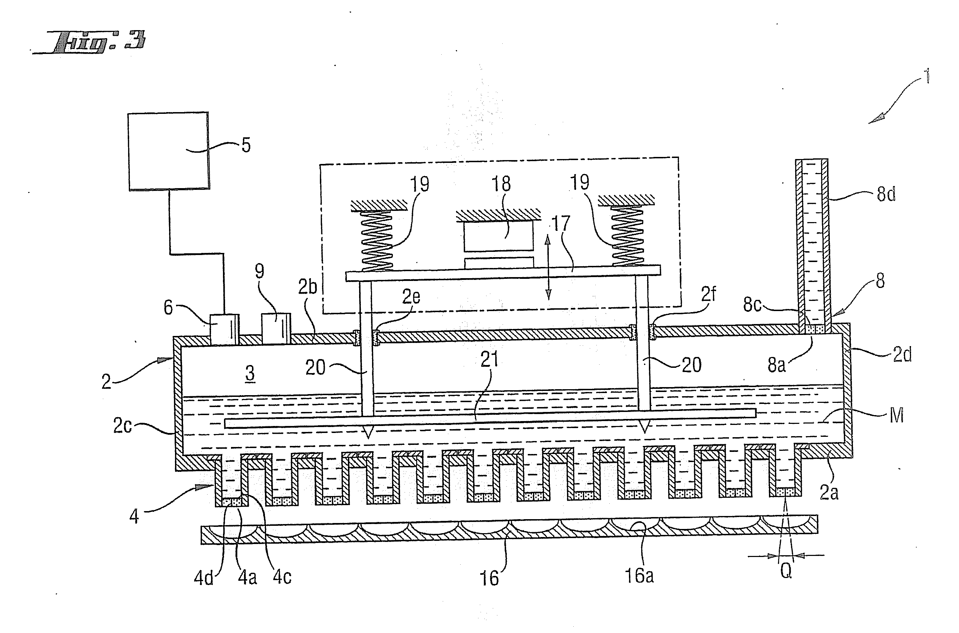

Fig. 3 zeigt schematisch den Aufbau eines ersten Ausführungsbeispiels der erfindungsgemässen Giessmaschine 1 in einer teilweise geschnitten Ansicht. Der Massebehälter 2 hat eine relativ grosse Bodenfläche und Deckenfläche, während er eine relativ geringe Höhe aufweist. In der Bodenwand 2a des Massebehälters 2 sind eine Vielzahl von Düsen 4 kurzer Bauform montiert, die jeweils eine Düsenöffnung 4a mit z.B. einer Schlitzmembran 4c oder einer anderweitig gelochten Membran, wie z.B. einer Siebmembran, aufweisen. In der Deckenwand 2b des Massebehälters 2 sind ein Druckventil 6 sowie ein Entgasungsventil 9 mit einer Entgasungsöffnung angeordnet. Das Druckventil 6 steht mit einem Druckbehälter 5 in Fluidverbindung. Das Entgasungsventil 9 kann ähnlich wie die Düse 4 aufgebaut sein, d.h. es kann eine flexible Membran mit Schlitzen und oder Löchern in der Entgasungsöffnung besitzen. Unterhalb des Massebehälters 2 und der Düsen 4 ist eine Form 16 mit einer Vielzahl von Alveolen 16a angeordnet, wobei jeder Düse 4 eine Alveole 16a zugeordnet ist oder durch eine Relativbewegung zwischen dem Massebehälter 2 und der Form 16 zuordenbar ist. Vorzugsweise wird die Form 16 bewegt, während der Massebehälter 2 in Ruhestellung bleibt.

Ausserdem besitzt die erfindungsgemässe Giessmaschine 1 ein Zufuhrventil 8 einer Zufuhröffnung 8a in der Deckenwand 2b. Durch diese Zufuhröffnung 8a wird flüssige Schokolade über eine Zufuhrleitung 8d in den Massebehälter 2 eingefüllt. Auch diese Öffnung 8a ist mit einer Ventilfunktion versehen, um zu verhindern, dass komprimierte Luft oder ein anderes Gas bzw. Gasgemisch aus dem Innenraum 3 des Massebehälters 2 in die Zufuhrleitung 8d gelangt. Auch das hierfür verwendete Ventil kann ähnlich wie die Düse 4 aufgebaut sein, d.h. es kann eine flexible Membran 8c mit Schlitzen und oder Löchern in der Zufuhröffnung 8a besitzen.

Der Massebehälter 2 hat Seitenwände 2c, 2d mit einer relativ geringen Höhe. Wichtig ist, dass über die gesamte Bodenfläche des Massebehälters 2 gleichmässige Druckverhältnisse und ein einheitlicher Zustand der Masse M vorhanden ist. Dies wird dadurch erreicht, dass sich die zu giessende Masse M in einem praktisch quasistationären Zustand befindet und nur geringe, durch das Giessen bedingte Strömungsgeschwindigkeiten in der Masse M im Massebehälter 2 auftreten. Andererseits wird die quasistationäre Masse M im Massebehälter 2 über die gesamte Bodenfläche des Behälters 2 einheitlich konditioniert. Hierfür ist ein ausgedehntes netzartiges oder gitterartiges Werkzeug 21 vorgesehen, das sich im wesentlichen parallel zur Bodenwand 2a des Massebehälters 2 und innerhalb der zu giessenden Masse M erstreckt. Das Werkzeug 21 kann ein Gitter, eine Lochplatte ein Drahtgeflecht oder dergleichen sein. Es ist über vertikale Verbindungsstangen 20, die sich über abgedichtete Durchtritte 2e, 2f durch die Deckenwand 2b des Massebehälters 2 hindurch erstrecken, mit einer Schwingungseinheit verbunden, die ein Grundgestell 17, eine Schwingungsquelle 18 sowie mehrere Federn 19 aufweist. Über diese Schwingungseinheit kann das Werkzeug 21 in der Masse M auf und ab bewegt werden. Dadurch können in die zu giessende Masse M gezielt Scherspannungen und Dehnspannungen eingeleitet werden. Bei Schokolade z.B. kann dadurch eine Verringerung der Viskosität erzielt werden.

Neben dieser mechanischen Konditionierung (Scherung, Dehnung der Masse), kann auch eine thermische Konditionierung (Temperierung) der Masse M erfolgen. Hierfür sind in oder an den Wänden, vorzugsweise in oder unter der Bodenwand 2a, des Massebehälters 2 Heizvorrichtungen (nicht dargestellt) vorgesehen, mit denen sich die Behälterwände beheizen lassen. Alternativ oder zusätzlich ist das Werkzeug 21 beheizt, so dass die thermische Konditionierung gleichmässig über den gesamten Grundriss des Massebehälters 2 erfolgt.

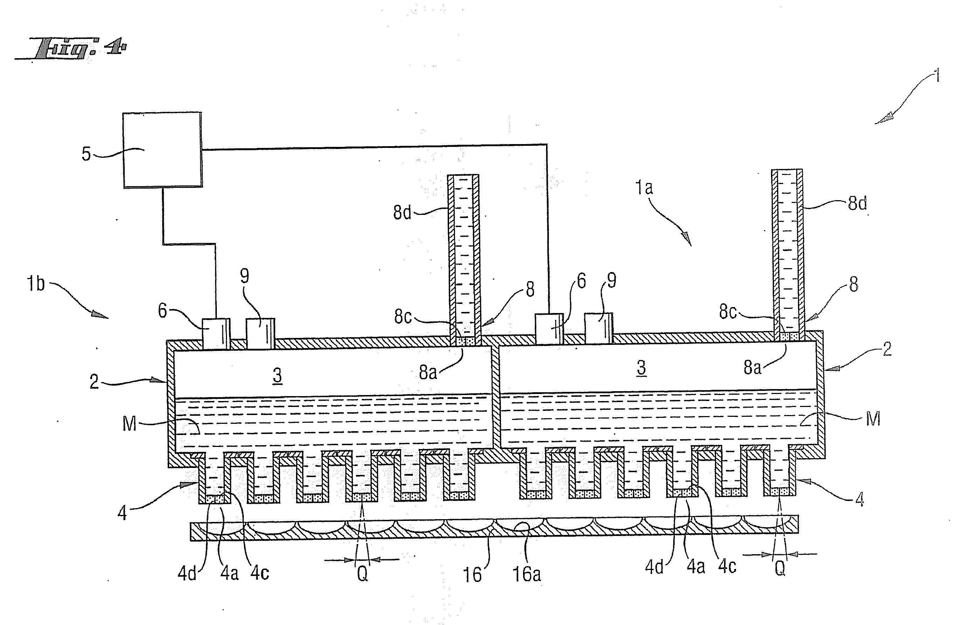

Fig. 4 zeigt schematisch den Aufbau eines zweiten Ausführungsbeispiels der erfindungsgemässen Giessmaschine 1 in einer teilweise geschnitten Ansicht. Diese Giessmaschine 1 besteht aus zwei nebeneinander angeordneten erfindungsgemässen Giessmaschinen 1a und 1b, die jeweils. identisch oder ähnlich wie die in Fig. 3 gezeigte erfindungsgemässe Giessmaschine aufgebaut sind. Zur Wahrung der Übersichtlichkeit wurden in Fig. 4 das Werkzeug 21 und die Schwingungseinheit 17, 18, 19, 20, 21 (siehe Fig. 3) der jeweiligen Giessmaschinen 1a und 1b weggelassen. Durch eine derartige Anordnung von zwei oder mehreren erfindungsgemässen Giessmaschinen 1a, 1 b, etc. können unterschiedliche Massen M gemeinsam zu gegossenen Artikeln verarbeitet werden. Es können z.B. unterschiedliche Schokoladensorten, die sich in ihrer Zusammensetzung (Rezept) und/oder in ihrer Konditionierungsbehandlung (Schereintrag, Temperierung) unterscheiden, zu einem Confiserie-Artikel verarbeitet werden.

Mit der in Fig. 2, Fig. 3 und Fig. 4 dargestellten erfindungsgemässen Giessmaschine 1 lässt sich das erfindungsgemässe Verfahren durchführen.

Dabei wird die giessbare Masse, wie z.B. Schokoladenmasse, in dem Massebehälter 2 bereitgestellt. Die Masse in dem Massebehälter 2 wird thermisch und mechanisch konditioniert, wofür das Werkzeug 21 (siehe Fig. 3) in dem Massebehälter auf und ab bewegt wird. Je nach Bedarf kann die Bewegung des Werkzeugs 21 eingestellt werden, wobei man einerseits die Amplitude und andererseits die Frequenz des Werkzeugs einstellen kann. Für die Verarbeitung von Schokoladenmasse stellt man die Temperatur der Masse in dem Behälter 2 auf einen Wert von etwa 30[deg.]C bis etwa 32<0>C ein, während man für die Vibration des Werkzeugs 21 eine Amplitude von 1 mm bis 20 mm wählt und eine Frequenz von 1 Hz bis 200 Hz wählt. Dadurch lassen sich klar definierte Fliesseigenschaften für die zu giessende Masse bzw. Schokolade einstellen.

Um den Giessvorgang auszulösen, wird dann in dem Massebehälter-Innenraum 3 ein Überdruck erzeugt. Hierfür wird das Druckventil 6 geöffnet, so dass aus der Druckquelle 5 Druckluft oder ein anderes komprimiertes Gas oder Gasgemisch in den Innenraum 3 des Massebehälters 2 strömt. Durch diesen Überdruck wird die Masse M gleichmässig durch die flexiblen Düsen 4 in die Alveolen 16a gepresst.

Anstelle des punktuell an der Deckenwand 2b des Massebehälters 2 angebrachten Druckventils 6 können auch über die gesamte Deckenwand 2b gleichmässig verteilte, in den Innenraum 3 des Massebehälters 2 mündende Druckleitungen (nicht gezeigt) vorgesehen sein. Diese haben entweder jeweils ein eigenes Druckventil an der Mündung, oder sie verzweigen sich von einer Sammel-Druckleitung, in der dann nur ein einziges Druckventil angebracht ist.

Anstelle von einem oder mehreren Druckventilen 6 kann auch eine grossflächige, gasdichte Membran (nicht gezeigt) in einer oder mehreren Wänden des Massebehälters 2 vorgesehen sein. Vorzugsweise ist diese Membran in der Deckenwand 2b des Massebehälters 2 angeordnet. Durch Hineindrücken dieser Membran kann dann in dem Massebehälter 2 ein Überdruck erzeugt werden, wodurch die Masse M durch die Düsen 4 gepresst wird. Die Membran muss dann wieder zurückbewegt werden. Dabei entsteht ein Unterdruck in dem Massebehälter 2, der durch geeignete Einlassventile (nicht gezeigt) ausgeglichen wird.

Vorzugsweise handelt es sich bei der Membran um eine elastische Membran. Wenn diese elastische Membran losgelassen wird, bewegt sie sich automatisch wieder zurück, und der entstehende Unterdruck saugt über die erwähnten Einlassventile Luft oder ein anderes Gas oder Gasgemisch in den Massebehälter 2.

Besonders vorteilhaft ist es, wenn die elastische Membran in der Deckenwand 2b des Massebehälters 2 porös ist, so dass bei einer bestehenden Druckdifferenz zwischen er Innenseite und der Aussenseite der Membran durch das Hindurchströmen der Gasmo-leküle nur ein relativ langsamer Druckausgleich erfolgt. Durch das Hin-eindrücken einer solchen elastischen und porösen Membran bildet sich im Innern des Massebehälters 2 zunächst ein Staudruck aufgrund des Durchströmungswiderstands der porösen Membran. Dieser Überdruck hält aber ausreichend lange an, um durch jede der identischen flexiblen Düsen 4 eine bestimmte identische Menge der Masse M hindurchzudrücken. Typischerweise erfolgt das Hineindrücken der porösen elastischen Membran innerhalb eines Zeitraums von weniger als einer Sekunde, während der Druckausgleich durch die Membran hindurch und deren Zurückbewegung während zwei bis einigen wenigen Sekunden erfolgt.

Während des Zurückbewegens der Membran entsteht im Massebehälter 2 ein geringer Unterdruck, der zusammen mit der flexiblen Düse 4 dazu beiträgt, ein Nachfliessen bzw. Nachtropfen von Masse M nach dem Giesen durch die Düsen 4 zu verhindern.

Das Vibrieren des Werkzeugs 21 (siehe Fig. 3) trägt nicht nur zur Konditionierung, d.h. Einstellung der Theologischen Eigenschaften, der Masse M bei, sondern unterstützt auch ein Entgasen der Masse M, d.h. ein Entweichen von Luftblasen oder anderen Gasblasen aus der Masse M.

Erfindungsgemäss wird während des Hindurchpressens der Masse M durch eine mit dem Massebehälter 2 in Fluidverbindung stehende Düse 4 der Strömungsund/oder Öffnungsquerschnitts Q der Düsen 4 verändert. Diese Veränderung des Öffnungsquerschnitts Q kann aktiv oder passiv erfolgen. Bei der aktiven Änderung des Querschnitts Q wird eine Düse 4 mit einem aktiv verformbaren flexiblen Element verwendet, während bei der passiven Änderung des Querschnitts Q eine Düse 4 mit einem passiv verformbaren flexiblen Element verwendet wird.

Vorzugsweise wird zumindest während des Hindurchpressens der Masse M durch die Düse 4 der Druck der durch die Düse gepressten Masse erfasst. Der erfasste Druck der Masse wird dann z.B. als Grundlage für die Steuerung des Strömungsoder Öffnungsquerschnitts Q der Düse 4 verwendet. Alternativ oder ergänzend kann der in der Düse 4 erfasste Druck auch zur Steuerung der Druckausübung in dem Massebehälter 2 verwendet werden. Insbesondere wird dabei das Öffnen des Druckventils 6 oder das Hin-eindrücken der porösen elastischen Membran auf der Grundlage dieses erfassten Drucks angesteuert.

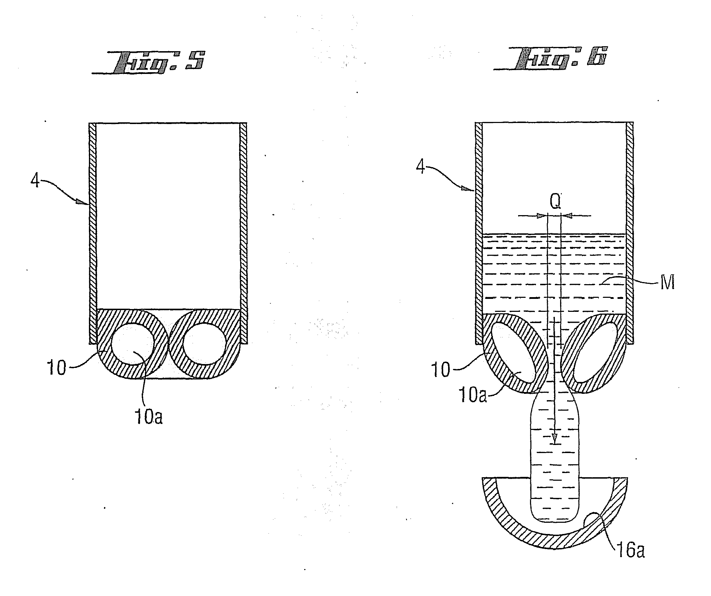

Fig. 5 zeigt schematisch den Aufbau einer ersten Ausführung der Düse 4 der erfindungsgemässen Giessmaschine 1 in einer Schnittansicht in einem ersten Betriebszustand (undurchströmter Ruhezustand, geschlossene Düse). Die hier gezeigte Düse 4 hat einen flexiblen Bereich 10 aus einem gummiartigen Elastomermaterial Dieser flexible Bereich 10 ist weist einen Hohlraum 10a auf und ist am unteren Düsenende angeordnet. Im vorliegenden Fall wird der flexible Bereich 10 durch ein im unverformten Ruhezustand torusartiges Element aus einem Elastomer gebildet. Durch die Wahl des Elastomermaterials (Härte des Gummis) und durch die Gestaltung der geometrischen Form (grosser Radius des Toms, kleiner Radius des Torus, Wanddicke des Toms) lässt sich der Strömungswiderstand der Düse 4 einstellen. Darüber hinaus kann der Hohlraum 10a mit einem Fluid gefüllt sein. Dadurch kann die Flexibilität des flexiblen Bereichs bzw. dessen Strömungswiderstand ebenfalls eingestellt werden. Als Fluid können ein kompressibles Fluid, wie z.B. Luft oder ein anderes Gas oder Gasgemisch, oder ein inkompressibles Fluid, wie z.B. Wasser oder ein Öl, verwendet werden. Über den Druck des kompressiblen Fluids lässt sich die Härte des Torus bzw. Schlauches einstellen, während über eine inkompressible Fluidfüllung auch der Verformungswiderstand aufgrund der inneren Reibung der Fluidfüllung eingestellt werden kann.

Eine besonders "intelligente" strömungsadaptive Düse 4 erhält man, wenn sowohl ein erster Hohlraum für ein inkompressibles Fluid als auch ein zweiter Hohlraum für ein kompressibles Fluid in dem elastischen Bereich der Düse 4 vorgesehen sind. Dadurch können die Verformungseigenschaften (Härte, Verformungswiderstand, etc.) des flexiblen Bereichs über weite Grenzen hinweg eingestellt werden. Vorzugsweise stehen der erste Hohlraum mit einer druckveränderlichen Quelle für das inkompressible Fluid und/oder der zweite Hohlraum mit einer druckveränderlichen Quelle für das kompressible Fluid in Fluidverbindung. Dies ermöglicht eine Steuerung der Düsenflexibilität bzw. des Düsen-Strömungswiderstands. Für diese Steuerung können Messdaten der Masseströmung durch die Düsen 4 herangezogen werden, wie z.B. der Massedruck in der Düse 4 oder die Massen-Strömungsgeschwindigkeit bzw. der Massen-Durchsatz durch die Düsen 4. Somit lassen sich die Düsen 4 regeln, und der Giessvorgang kann rheolo-gisch optimiert werden. Darüber hinaus wird ein Nachfliessen bzw. ein Nachtropfen der Masse M am Ende des Giessvorgangs verhindert.

Fig. 6 zeigt schematisch den Aufbau der ersten Ausführung der Düse der erfindungsgemässen Giessmaschine in einer Schnittansicht in einem zweiten Betriebszustand (durchströmter Giesszustand, geöffnete Düse). Durch den über den Massebehälter 2 (siehe Fig. 2, Fig. 3, Fig. 4) vermittelten Druck hat die Masse M den flexiblen Bereich 10 verformt und die anfänglich geschlossenen Düse 4 geöffnet. Der Öffnungsquerschnitt Q und der damit verbundene Durchsatz durch die Düse 4 ergibt sich durch den Druck der Masse M und durch die ggf. voreingestellte Düse (passive Düse) oder durch die während des Giessens gesteuerte oder geregelte Düse (aktive Düse). So kann eine dosierte und in ihrer Struktur definierte Menge der Masse M in die Alveole 16a gegossen werden.

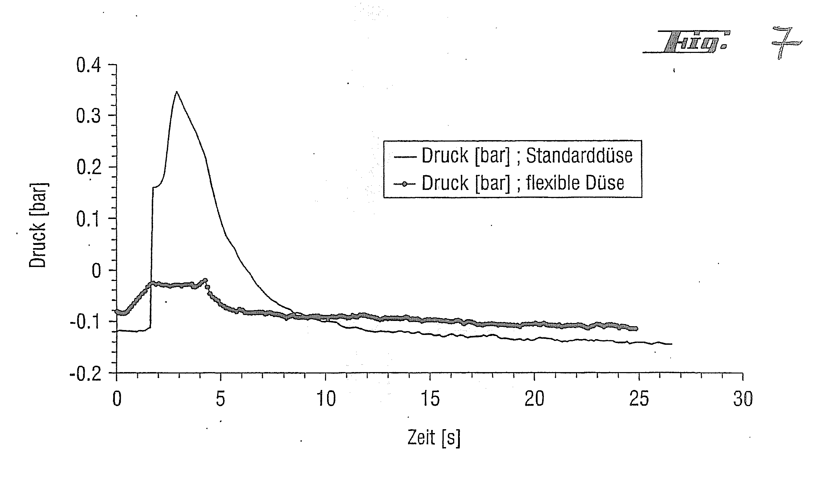

Fig. 7 zeigt den zeitlichen Druckverlauf während eines Giessvorgangs in einer herkömmlichen Giessmaschine (mit starrer Düse) und in einer erfindungsgemässen Giessmaschine 1 mit flexibler Düse 4. Während bei der herkömmlichen starren Düse während des Giessens bzw. Hindurchpressens der Masse durch die Düse eine stark ausgeprägte Druckspitze in der Düse erzeugt wird (dünne Linie), entsteht beim Giessen bzw. Hindurchpressen der Masse M durch die erfindungsgemässe flexible Düse 4 praktisch keine Druckspitze (Linie entlang der fetten Punkte). Vielmehr ergibt sich ein recht flacher Druckverlauf auf relativ niedrigem Niveau. Dadurch kann die erfindungsgemässe Giessmaschine 1 entsprechend leichter und kleiner dimensioniert werden. Auch die Druckquellen der erfindungsgemässen Giessmaschine 1 brauchen nicht so stark ausgelegt zu werden. Somit kann die erfindungsgemässe flexible Giessmaschine 1 nicht nur mit sehr viel weniger beweglichen Teilen als eine herkömmliche Giessmaschine aus starren Teilen aufgebaut werden, sondern sie kann insgesamt viel kleiner dimensioniert werden und benötigt weniger mechanische Energie als eine herkömmliche Giessmaschine.

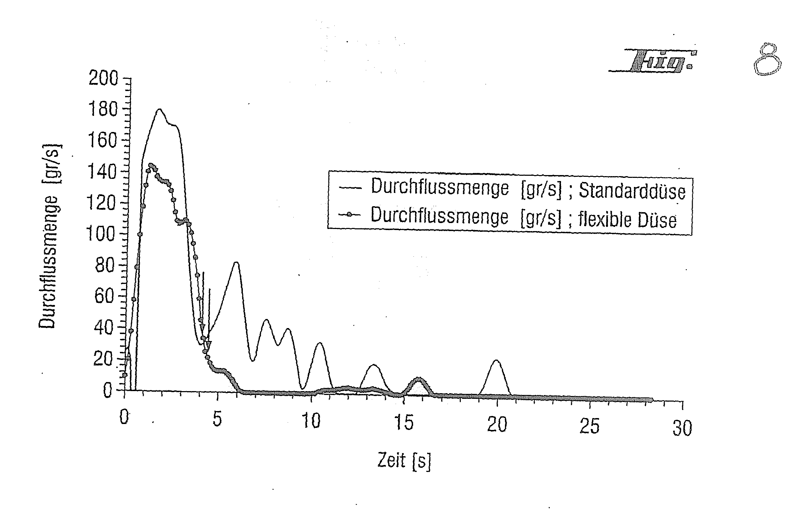

Fig. 8 zeigt den zeitlichen Verlauf des Massenflusses während eines Giessvorgangs in einer herkömmlichen Giessmaschine (mit starrer Düse) und in einer erfindungsgemässen Giessmaschine 1 mit flexibler Düse 4. Man sieht, dass bei der herkömmlichen Giessmaschine mit starrer Düse nach dem Giessen ein starkes Nachfliessen bzw. Nachtropfen auftritt (dünne Linie, nach dem Zeitpunkt bei ca. 5 Sekunden), während bei der erfindungsgemässen Giessmaschine 1 mit flexibler Düse 4 praktisch kein Nachfliessen bzw. Nachtropfen auftritt (Linie entlang der fetten Punkte, nach dem Zeitpunkt bei ca. 5 Sekunden).

Die vorliegende Erfindung ist nicht auf die hier gezeigten Beispiele beschränkt. So könnten z.B. auch flexible Düsen mit zwei oder mehreren konzentrischen Kanälen verwendet werden. Dadurch kann das klassische One-Shot-Verfahren flexibilisiert werden.

### Bezugszeichenliste

- 1 _{:}: Giessmaschine
- 1a :: Giessmaschine
- 1b .: Giessmaschine
- 2 :: Massebehälter
- 2a :: Bodenwand
- 2b :: Deckenwand
- 2c :: Seitenwand
- 2d :: Seitenwand
- 2e :: Durchtritt
- 2f :: Durchtritt
- 3 :: Innenraum
- 4 :: Düse
- 4a :: Düsenöffnung
- 4b :: oberer Bereich
- 4c :: Membran
- 4d :: Schlitz
- 5 :: Druckbehälter
- 6 :: Druckventil
- 7a :: Antrieb
- 7b :: Kolbenstange
- 7c :: Kolben
- 8 :: Zufuhrventil
- 8a :: Zufuhröffnung
- 8c :: Membran
- 8d :: Zufuhrleitung
- 9 :: Entgasungsventil
- 10 :: flexibler Bereich
- 10a :: Hohlraum
- 12 :: Düse
- 14 :: Düse
- 16 :: Form
- 16a :: Alveole
- 17 :: Grundgestell
- 18 :: Schwingungsquelle
- 19 :: Feder
- 20 .: Verbindungsstange
- 21 :: Werkzeug
- M :: Masse
- Q :: Querschnitt

## Patentansprüche

1. Giessmaschine (1) zum Herstellen eines Verzehrproduktes aus einer giessbaren Fettmasse wie z.B. Schokolade, mit:
> einem Massebehälter (2) zur Aufnahme der giessbaren Fettmasse (M);
> einer Vielzahl von Düsen (4), die mit dem Massebehälter-Innenraum (3) in Fluidverbindung stehen;
> wobei der Düse derart ein Aufnahmebereich für die durch die Düse giessbare Fettmasse zuordbar ist, dass sich unterhalb jeder Düse eine Alveole befindet;
**dadurch gekennzeichnet, dass** die Düse (4) eine Düsenöffnung oder eine Düsenverengung hat, deren Öffnungsquerschnitt bzw. Strömungsquerschnitt flexibel ist.

2. Giessmaschine (1) zum Herstellen eines Verzehrproduktes aus einer giessbaren Fettmasse wie z.B. Schokolade, mit:
> einem Massebehälter (2) zur Aufnahme der giessbaren Fettmasse (M);
> einer Vielzahl von Düsen (4), die mit dem Massebehälter-Innenraum (3) in Fluidverbindung stehen;
> wobei unterhalb des Massebehälters (2) und der Düsen (4) eine Form (16) mit einer Vielzahl von Alveolen (16a) anordbar ist und jeder Düse (4) eine Alveole (16a) durch eine Relativbewegung zwischen dem Massebehälter (2) und der Form (16) zuordbar ist;
**dadurch gekennzeichnet, dass** die Düse (4) eine Düsenöffnung oder eine Düsenverengung hat, deren Öffnungsquerschnitt bzw. Strömungsquerschnitt flexibel ist.

3. Giessmaschine nach Anspruch 1 oder 2, **dadurch gekennzeichnet, dass** die Giessmaschine eine Druckquelle (5) zum Erzeugen eines Überdrucks in dem Massebehälter-Innenraum (3) umfasst.

4. Giessmaschine nach einem der Ansprüche 1 bis 3, **dadurch gekennzeichnet, dass** der Öffnungsquerschnitt bzw. der Strömungsquerschnitt (Q) der Düsenöffnung, insbesondere durch Druck, weiter insbesondere durch den absoluten Druck im Massebehälter-Innenraum, steuerbar ist.

5. Giessmaschine nach Anspruch 4, **dadurch gekennzeichnet, dass** der die Düsenöffnung steuernde Druck über die im Massebehälter-Innenraum enthaltene und die Innenwand der Düsenöffnung kontaktierende giessbare Masse vermittelt wird.

6. Giessmaschine nach einem der Ansprüche 1 bis 5, **dadurch gekennzeichnet, dass** die Düse eine Ventilfunktion besitzt.

7. Giessmaschine nach einem der Ansprüche 1 bis 6, **dadurch gekennzeichnet, dass** die Düse zumindest im Bereich der Düsenöffnung, ein flexibles elastisches Material, insbesondere ein Elastomermaterial, aufweist, bevorzugt dass die Düse ein elastisches Element aufweist, das die Düsenöffnung im Ruhezustand verschliesst, wobei das elastische Element insbesondere ein ringartiges Element ist, das sich um die Düsenöffnung herum erstreckt.

8. Giessmaschine nach einem der Ansprüche 1 bis 7, **dadurch gekennzeichnet, dass** die Düse ein elastisches Element mit einem Hohlraum aufweist, der mit einer Fluidquelle mit veränderlichem Fluiddruck in Fluidverbindung steht.

9. Giessmaschine nach einem der Ansprüche 1 bis 8, **dadurch gekennzeichnet, dass** die Düse einen geschlitzten, einen balgartig gefalteten, einen handschuh-fingerartig umstülpbaren Bereich oder Kombinationen davon aufweist, insbesondere weist die Düse einen Bereich mit einem Kreuzschlitz aus zwei sich rechtwinklig kreuzenden Schlitzen oder mit einem Sternschlitz aus drei oder mehr sich sternartig kreuzenden Schlitzen auf.

10. Giessmaschine nach einem der Ansprüche 1 bis 9, **dadurch gekennzeichnet, dass** die Düse und/oder der Massebehälter mindestens einen Drucksensor zum Erfassen des Druckes in ihrem/seinem Innern aufweist.

11. Verwendung einer Düse oder einer Vielzahl von Düsen mit einer Düsenöffnung oder einer Düsenverengung, deren Öffnungsquerschnitt bzw. Strömungsquerschnitt flexibel ist, zum Herstellen eines Verzehrproduktes aus einer giessbaren Fettmasse wie z.B. Schokolade, in einer Giessmaschine, insbesondere nach einem der Ansprüche 1-10, wobei unterhalb jeder Düse (4) eine Form (16) mit einer Vielzahl Alveolen bzw. Vertiefungen (16a) angeordnet ist und wobei insbesondere die Form (16) mit der Vielzahl von Alveolen (16a) unterhalb eines Massebehälters (2) und der Düse/n (4) angeordnet ist, wobei jeder Düse (4) eine Alveole (16a) zugeordnet ist oder durch eine Relativbewegung zwischen dem Massebehälter (2) und der Form (16) zuordbar ist.

12. Verfahren zum Herstellen eines Verzehrproduktes aus einer giessbaren Fettmasse wie z.B. Schokolade, vorzugsweise unter Verwendung einer Giessmaschine gemäss einem der Ansprüche 1 bis 10, mit den folgenden Schritten:
> Bereitstellen einer temperierten giessbaren Fettmasse in einem Massebehälter;
> Anordnen einer Form (16) mit einer Vielzahl von Alveolen (16a) unterhalb des Massebehälters (2) und einer Düse (4), wobei insbesondere jeder Düse (4) durch eine Relativbewegung zwischen dem Massebehälter (2) und der Form (16) eine Alveole (16a) zugeordnet wird;
> Hindurchpressen der Fettmasse durch eine mit dem Massebehälter in Fluidverbindung stehende Düse bei gleichzeitigem Verändern des Strömungs- und/oder Öffnungsquerschnitts der Düse.

13. Verfahren nach Anspruch 12, **dadurch gekennzeichnet, dass** ein Überdruck in dem Massebehälter-Innenraum erzeugt wird.

14. Verfahren nach Anspruch 12 oder 13, **dadurch gekennzeichnet, dass** zumindest während des Hindurchpressens der Masse durch die Düse der Druck der durch die Düse gepressten Masse erfasst wird, wobei der erfasste Druck der Masse insbesondere als Grundlage für die Steuerung des Strömungs- oder Öffnungsquerschnitts der Düse und/oder als Grundlage für die Steuerung der Druckausübung in dem Massebehälter verwendet wird.

15. Verfahren nach mindestens einem der Ansprüche 12 bis 14, **dadurch gekennzeichnet, dass** ein elastisches Element der Düse, die zumindest im Bereich der Düsenöffnung ein flexibles elastisches Material, insbesondere ein Elastomermaterial, aufweist, die Düsenöffnung im Ruhezustand verschliesst.
